# EUROPEAN PATENT APPLICATION

(11) **EP 4 450 952 A1**
(43) Date of publication of application: **23.10.2024**
(21) Application number: 22908002.3
(22) Date of filing: 16.12.2022
(51) Int. Cl.: G01N 15/02, G01N 15/14, G06T 7/00, G06T 7/90, B08B 15/02

(54) **APPARATUS AND METHOD FOR MONITORING PARTICLE SIZE OF RAW MATERIALS OF BLAST FURNACE**

(30) Priority: 17.12.2021 KR 20210181934
(71) Applicant: POSCO Co., Ltd, Pohang-si, Gyeongsangbuk-do 37859 (KR)
(72) Inventor: CHOI, Sang-Woo, Pohang-si, Gyeongsangbuk-do 37877 (KR); PARK, Chang-Hyun, Pohang-si, Gyeongsangbuk-do 37877 (KR); PARK, Young-Do, Pohang-si, Gyeongsangbuk-do 37877 (KR); BAE, Ho-Moon, Pohang-si, Gyeongsangbuk-do 37877 (KR)
(74) Representative: Meissner Bolte Partnerschaft mbB
(86) International application number: PCT/KR2022/020586
(87) International publication number: WO 2023/113537

(57) **Abstract**

The purpose of the present invention is to provide an apparatus and a method for assessing the particle size of a blast furnace raw material, wherein individual particles of a raw material are detected from a video image captured to assess the particle size of the raw material, and the type of the raw material is simultaneously identified, thereby assessing the particle size with regard to each raw material type. A video acquisition unit acquires continuous videos of raw materials transferred to a blast furnace. An assessment unit identifies the type of raw materials according to the boundary of respective raw materials and the surface color and pattern of respective raw materials, based on the difference in brightness of raw material images included in the videos, by using a preconfigured deep learning algorithm. The representative size value of raw material individual particles is determined by using size information based on the number of pixels occupied by raw material individual particles in the raw material images. In addition, the assessment unit calculates the average particle size of all raw materials according to the determined representative size value of raw material individual particles, and calculates the particle size with regard to each raw material type according to the raw material type distinguished according to the deep learning algorithm.

## Description

### Technical Field

The present disclosure relates to an apparatus and a method for assessing a particle size of raw materials of a blast furnace.

### Background Art

In a conventional method of measuring a particle size of raw materials, a sample of target raw materials is taken, the sample is passed through a mesh-shaped sieve having holes of a certain size, and the particle size is calculated with a concept of a weighted average based on a weight ratio passed through each section based on the size of the mesh. In this manner, a size distribution may be different even within the corresponding section, but this influence is not taken into account, and since it is particle size information confirmed with a very small amount of local sample, an overall trend is not the same, so there is a disadvantage of low representativeness.

To compensate therefor, a method of measuring an average particle size was developed by capturing a video image of a raw material supplied from a belt conveyor, finding a boundary of particles of each individual raw material using an imaging technique, and assessing the individual size thereof. Although it is a limited measurement method which is measured mainly on a visible surface taken from above, representativeness may be improved since all portions to be supplied are imaged evenly, and variability in real time may be displayed well.

Meanwhile, there is an advantage of continuously measuring, but since all the raw materials to be supplied are imaged, and when raw materials are supplied in a mixed state, it is often difficult to determine what causes a variation in particle size. In the case of a blast furnace, a composition of raw materials may be divided into three patterns such as coke particles - ore large particles - ore small particles, according to a combination of supplied raw materials. In the case in which coke particles are supplied, only coke particles are limitedly supplied so that raw materials are not mixed. However, when iron ore, that is, sintered ore, is supplied, raw materials other than sintered ore or coke particles were supplied together, and when assessing a particle size of raw materials using the previous image, a change in the individual particle size of the mixed raw material appears as an overall, variation, so there was a lack of information. For example, when large ore particles are supplied, sintered ore is supplied together with sintered ore, pellets, and medium-sized coke particles. As described above, when 3 to 4 or more raw materials are supplied, when a particle size of one thereof changes, which appears as a change in an overall average particle size, it may not be possible to know which raw material changed and the overall average particle size changed. In operation, when there is a change in a particle size, the change information is checked and, if necessary, it may be necessary to request the particle size be corrected in a pre-processing process, or to adjust charging conditions of the raw materials according to the changed particle size situation. In this case, when it was not possible to determine which raw material was a cause of the change, it was difficult to take follow-up measures.
(Patent Document 1) Republic of Korea Patent Publication No. 10-2021-0125529

### Summary of Invention

### Technical Problem

An aspect of the present disclosure is to provide an apparatus and a method for assessing a particle size of raw materials of a blast furnace, wherein individual particles of raw materials are detected from a video image captured to assess the particle size of the raw material, and the type of the raw material is simultaneously identified, thereby assessing the particle size with regard to each raw material type.

### Solution to Problem

According to an aspect of the present disclosure, an apparatus for assessing a particle size of raw materials of a blast furnace, may include: an image acquisition unit acquiring continuous images of raw materials transferred to a blast furnace; and an assessment unit for assessing particle size of respective material by determining boundaries of respective material based on contrast of the image and determining type of respective material based on color and pattern of surface of respective material.

According to an aspect of the present disclosure, a method for assessing a particle size of raw materials of a blast furnace, may include operations in which: an image acquisition unit acquires continuous images of raw materials transferred to a blast furnace; an assessment unit identifies a type of raw materials according to a boundary of respective raw materials and a surface color and pattern of respective raw materials, based on a difference in brightness of raw material images included in the images, by using a preconfigured artificial intelligence algorithm; the assessment unit determines a representative size value of raw material individual particles by using size information according to the number of pixels occupied by raw material individual particles in the raw material images; and the assessment unit calculates an average particle size of all raw materials according to the determined representative size value of raw material individual particles, and calculates a particle size with respect to each raw material type according to the raw material type distinguished according to the artificial intelligence algorithm.

### Advantageous Effects of Invention

As set forth above, according to an embodiment of the present disclosure, when a plurality of types of raw materials are mixed when supplying raw materials, a type of raw materials may be identified with respect to each raw material type and a particle size thereof may be assessed, and a variation in the particle size with respect to each raw material type may be confirmed to take action or respond to related operation matters.

### Brief description of drawings

FIG. 1 is a schematic configuration diagram of an apparatus for assessing a particle size of raw materials of a blast furnace according to an embodiment of the present disclosure.
FIG. 2 is a schematic configuration diagram of an image acquisition unit of an apparatus for assessing a particle size of raw materials of a blast furnace according to an embodiment of the present disclosure.
FIG. 3 is a schematic flowchart of a method for assessing a particle size of raw materials of a blast furnace according to an embodiment of the present disclosure.
FIG. 4 is a view illustrating a case in which sintered ore and pellets are mixed among images captured by the apparatus for assessing a particle size of raw materials of a blast furnace according to an embodiment of the present disclosure.
FIG. 5 is a view illustrating a case in which sintered ore and sieved ore are mixed among images captured by the apparatus for assessing a particle size of raw materials of a blast furnace according to an embodiment of the present disclosure.
FIG. 6 is a view illustrating a case in which sintered ore and small coke particles are mixed among images captured by the apparatus for assessing a particle size of raw materials of a blast furnace according to an embodiment of the present disclosure.
FIG. 7 is a diagram illustrating an image captured by the apparatus for assessing a particle size of raw materials of a blast furnace by the apparatus for assessing a particle size of raw materials of a blast furnace according to an embodiment of the present disclosure and actual measurement data for learning artificial intelligence.
FIGS. 8 and 9 are diagrams in which individual particles of raw materials are detected from the images captured by the apparatus for assessing a particle size of raw materials of a blast furnace and the learned artificial intelligence with respect to each raw material type, respectively.
FIGS. 10 and 11 are diagrams in which a size thereof is identified and determined from the images captured by the apparatus for assessing a particle size of raw materials of a blast furnace according to an embodiment of the present disclosure by artificial intelligence with respect to each raw material type.
FIG. 12 is a diagram illustrating an exemplary computing environment in which an apparatus for assessing a particle size of raw materials of a blast furnace according to an embodiment of the present disclosure.

### Best Mode for Invention

Hereinafter, preferred embodiments of the present disclosure will be described. Embodiments of the present disclosure may be modified in various forms, and the scope of the present disclosure should not be construed as being limited to the embodiments described below. The present embodiments are provided to those skilled in the art to further elaborate the present disclosure.

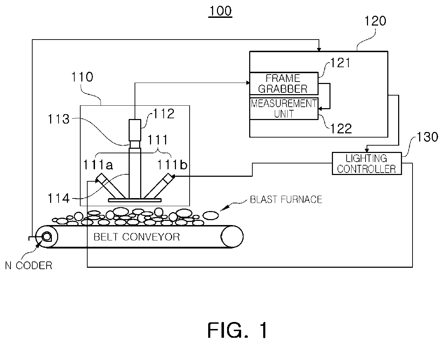

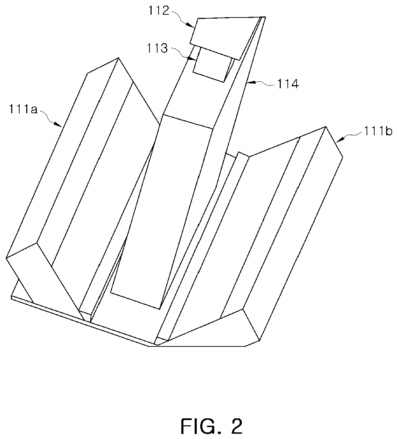

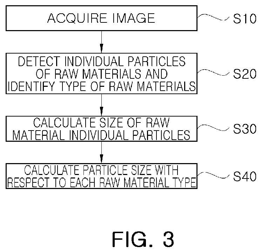

FIG. 1 is a schematic configuration diagram of an apparatus for assessing a particle size of raw materials of a blast furnace according to an embodiment of the present disclosure, and FIG. 2 is a schematic configuration of an image acquisition unit of the apparatus for assessing a particle size of raw materials of a blast furnace according to an embodiment of the present disclosure, and FIG. 3 is a schematic flowchart of a method for assessing a particle size of raw materials of a blast furnace according to an embodiment of the present disclosure.

Referring to FIG. 1, the apparatus 100 for assessing a particle size of raw materials of a blast furnace according to an embodiment of the present disclosure may include an image acquisition unit 110, and an assessment unit 120, and may further include a lighting controller 130.

The image acquisition unit 110 may acquire an image of a raw material transferred to a blast furnace through a belt conveyor.

Referring to FIG. 2 together with FIG. 1, the image acquisition unit 110 may include a lighting unit 111, a camera 112, a purge hood 113, and a frame 114.

There is a belt conveyor provided at a lower end of the image acquisition unit 110, and light of the image acquisition unit 110 may illuminate the raw material supplied to the belt conveyor as widely as a width of the belt conveyor.

Lights 111a and 111b of the lighting unit 111 may be installed before and after a moving direction of the belt conveyor, and when two lights are illuminated, light may intersect and converge in an intermediate portion, and a camera 112 thereabove may capture images in that region. A purge hood 113 may be installed directly below the camera 112 in order to block an inflow of dust from the raw material transferred to the camera 112, and a positive pressure may always be creased in a space inside the purge hood 113 to prevent the dust therebelow from rising toward the camera. A frame 114 may be formed in a lower portion of the purge hood 113, and the frame 114 may be spread as widely as a field of view of the camera 112 in a width direction. When the camera 112 thereabove is a line scan camera, the frame 114 may limit an amount of rising dust by opening only a very narrow gap.

In order for the image acquisition unit 110 to acquire an image of raw materials that is continuously supplied, a raw material transfer means such as the belt conveyor may be applied, and in order to capture an image synchronized with conveying speed of the belt conveyor, the image acquisition unit 110 may detect a rotational speed using an encoder connected to a pulley shaft of the belt conveyor. An image signal captured by the camera 112 is transmitted to the assessment unit 120.

The assessment unit 120 collects image data in a unit of frames using a frame grabber 121 and the image of raw materials detects respective individual particles using an artificial intelligence algorithm of the measurement unit 122 and simultaneously identify and detects the raw material type. The measurement unit 122 including such an artificial intelligence algorithm may be comprised of a graphic processing unit (GPU) and process images at a high speed to enable continuous measurement by quickly processing images acquired by capturing raw materials continuously supplied from a belt conveyor, or the like. The assessment unit 120 may control the lighting controller 130 to turn the light on during image capturing, according to a state in which the raw material is supplied, and turn off the light during a period in which the image is not captured because the supply of the raw material is stopped.

Referring to FIGS. 1 and 3, first, an image captured by the image acquisition unit 110 is transmitted to the assessment unit 120 (S10). The frame grabber 121 of the assessment unit 120 acquires image data in a unit of frames. A black and white grayscale image may be used as an image, but using a color image may be advantageous in distinguishing the type of raw material. Image acquisition can be obtained using an area camera to obtain an image in one frame unit, but in a continuously supplied facility such as a belt conveyor, it is possible to construct an image in a unit of frames by capturing images one line at a time in a width direction using a line scan camera and connecting the same consecutively. In particular, when a line scan camera is used when there is a lot of dust, and when an opening for capturing an image of the frame 114 is configured in a form of a rectangular slit, sufficient for a field of angle for capturing an image in a width direction, it may be an advantageous structure for acquiring a desired image while minimizing the inflow of dust.

Next, the measurement unit 122 of the assessment unit 120 may detect individual particles of raw materials and identify a type thereof (S20) . A boundary of the raw material is a blind spot of the lights 111a and 111b, and shadows are continuously formed, resulting in a boundary due to a difference in brightness. Since a color of surfaces of respective individual particles is different and a pattern of the surface is different, the type of raw materials may be identified using the characteristics thereof. As described above, identification of the type of raw materials according to a boundary of individual particles and particle surface characteristics may be easily implemented using an artificial intelligence algorithm.

Thereafter, the measurement unit 122 of the assessment unit 120 may calculate the size from a detection region of the detected raw material individual particles (S30). A raw material, located at a certain distance from the camera 112 have a size standard indicated by an interval of one pixel. The measurement unit 122 may obtain an area from the number of pixels occupied by an area of each individual particle of the raw material in the raw material image, and obtain information about dimensions such as a diameter, horizontal/vertical length and the like. The measurement unit 122 may determine a representative size value of raw material individual particles using such size information.

Subsequently, the measurement unit 122 of the assessment unit 120 may calculate an average particle size using the obtained size values of the individual particles (S40). The assessment unit may calculate an average particle size of all raw materials supplied during a designated period, and since the type of raw materials are identified, a particle size thereof may be calculated with respect to each raw material type.

As described above, if the particle size is calculated with respect to each raw material type, it is possible to check a particle size of which raw material varies among the raw materials, which are simultaneously supplied.

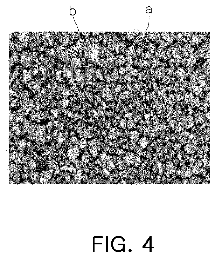

FIG. 4 is a view illustrating a case in which sintered ore and pellets among images captured by the apparatus for assessing a particle size of raw materials of a blast furnace according to an embodiment of the present disclosure. As illustrated in FIG. 4, sintered ore has a grayish-white rough surface and has a porous form like some basalt (identification code a) . On the other hand, pellets are brown, spherical and have an uneven diameter but bead-like in shape (identification code b). This can be easily distinguished by a naked eye, and as a person judges, an artificial intelligence algorithm of the measurement unit 122 may distinguish between sintered ore and pellets through a learning process.

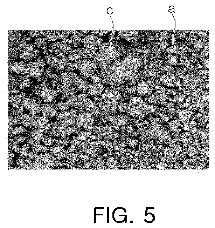

FIG. 5 is a view illustrating a case in which sintered ore and sieved ore are mixed among images captured by an apparatus for assessing a particle size of raw materials of a blast furnace according to an embodiment of the present disclosure. As illustrated in FIG. 5, in the raw material, sintered ore (identification code a) and brown gravel-shaped sieved ore (identification code c) is mixed. Sieved ore has an uneven surface, but has a relatively smooth surface compared to sintered ore, and has a brown color similar to that of pellets. That is, according to a color and surface pattern of the raw material, an artificial intelligence algorithm may distinguish the type of raw material through a learning process.

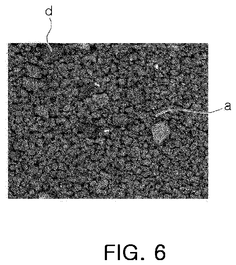

FIG. 6 is a view illustrating a case in which sintered ore (identification code a) and small coke particles (identification code d) are mixed among images obtained by an apparatus for assessing a particle size of raw materials of a blast furnace according to an embodiment of the present disclosure.

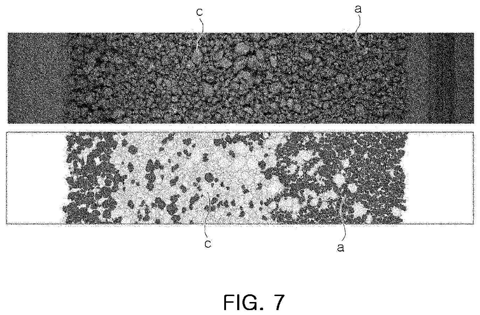

FIG. 7 is a view illustrating an image captured by the apparatus for assessing a particle size of raw materials of a blast furnace according to an embodiment of the present disclosure and actual measurement data for learning artificial intelligence. Referring to FIG. 7, a case in which sintered ore and sieved ore are mixed in the raw material is illustrated, wherein sintered ore may be indicated as a region with an identification code 'a,' and sieved ore may be indicated as a region with an identification code `c.' In addition, referring to FIG. 7, an image in which sintered ore and small-sized coke particles are mixed in the raw material is illustrated, and as illustrated there is grayish-white sintered ore, and darker gray particles correspond to coke particles. When detecting a boundary based on a difference in brightness, the particles were not identified with respect to each type and detected, but using an artificial intelligence algorithm of the measurement unit 122, not only a region of individual particles may be detected but also the type thereof may be identified and detected at once. The artificial intelligence algorithm may be a deep learning algorithm.

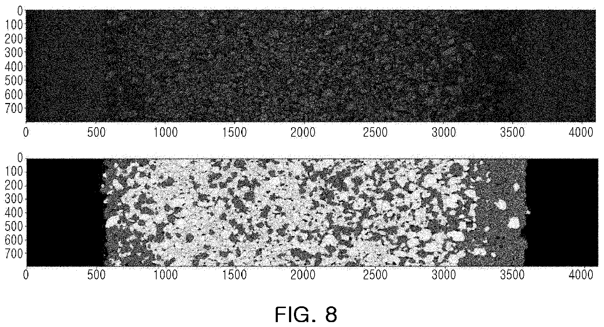

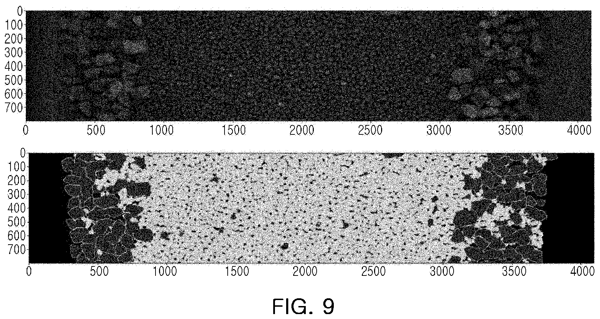

FIGS. 8 and 9 are diagrams in which individual particles of raw materials are detected from the images captured by the apparatus for assessing a particle size of raw materials of a blast furnace and the learned artificial intelligence with respect to each raw material type, respectively. As illustrated in FIGS. 8 and 9, it can be seen that the learned artificial intelligence algorithm of the measurement unit 122 receives an original video image captured at an upper end and outputs an image at a lower end in which raw materials are identified with respect to each raw material type.

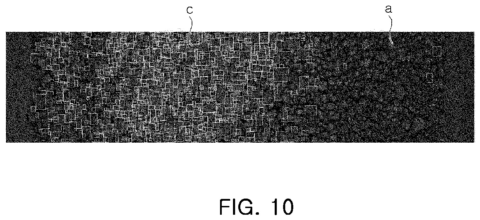

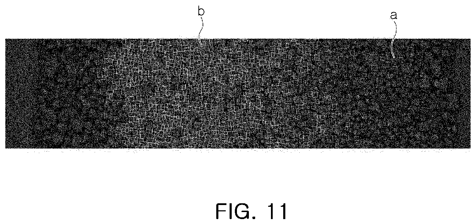

FIGS. 10 and 11 are diagrams in which a size thereof is identified and determined from the images captured by the apparatus for assessing a particle size of raw materials of a blast furnace according to an embodiment of the present disclosure by artificial intelligence with respect to each raw material type. Referring to FIGS. 10 and 11, as a result of determining the size of each individual particle using an output image of an artificial intelligence algorithm in which raw materials are identified and detected, each particle was indicated as a rectangular edge.

FIG. 10 illustrates a mixed case of sintered ore and sieved ore, wherein an external size of sintered ore was indicated as a square with an identification code `a,' and an external size of sieved ore was indicated as the same square with an identification code 'c,' and FIG. 11 illustrates a mixed case of sintered ore and pellets, wherein an external size of sintered ore was indicated as a square with an identification code `a,' and an external size of pellets was indicated as the same square with an identification code `b.'

The raw material supplied to a blast furnace is supplied at once by mixing coke, sintered ore, sieved ore, and pellets in one batch, and even when a composition ratio thereof varies depending on the composition, an overall average particle size may vary. Pellets are small in size, around 10mm, but coke particles supplied with sintered ore is 30 to 40mm or more in size, so when a composition ratio of pellets increases, an overall average particle size decreases, and when a composition ratio in which coke particles are mixed increases, the overall average particle size increases. However, if the particle size is calculated by identifying the raw material, the particle size is calculated for each raw material, such as the particle size of the sintered ore after collecting only the sintered ore, the particle size of the pellet after separating only the pellets, and a variation in the particle size thereof with respect to each raw material type is obtained. Therefore, an optical illusion effect caused by a variation in a particle size due to the variation in the composition ratio of each raw material may be reduced.

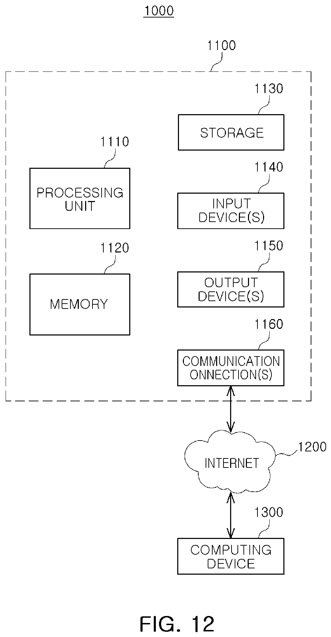

FIG. 12 is a diagram illustrating an exemplary computing environment in which an apparatus for assessing a particle size of raw materials of a blast furnace of the present disclosure may be implemented, and illustrates an example of a system 1000 including a computing device 1100 configured to implement one or more embodiments described above. For example, the computing device 1100 may include a personal computer, server computer, handheld or laptop device, mobile device (mobile phone, personal digital assistant, media player, and the like), multiprocessor system, consumer electronics, minicomputer, mainframe computer, distributed computing environments including any of the foregoing systems or devices, and the like, but an embodiment thereof is not limited thereto.

The computing device 1100 may include at least one processing unit 1110 and memory 1120. Here, the processing unit 1110 may include, for example, a central processing unit (CPU), a graphics processing unit (GPU), a microprocessor, an Application Specific Integrated Circuit (ASIC), a Field Programmable Gate Arrays (FPGA), and the like, and may have a plurality of cores. The memory 1120 may be volatile memory (e.g., RAM, or the like), non-volatile memory (e.g., ROM, flash memory, or the like), or a combination thereof.

In addition, the computing device 1100 may include an additional storage 1130. The storage 1130 includes a magnetic storage, an optical storage, and the like, but an embodiment thereof is not limited thereto. Computer-readable instructions for implementing one or more embodiments disclosed herein may be stored in the storage 1130, and other computer readable instructions for implementing an operating system, application programs, and the like may also be stored. The computer-readable instructions stored in the storage 1130 may be loaded into a memory 1120 for being executed by the processing unit 1110.

In addition, the computing device 1100 may include input device(s) 1140 and output device(s) 1150. Here, the input device(s) 1140 may include, for example, a keyboard, mouse, pen, voice input device, touch input device, infrared camera, image input device, or any other input device. In addition, the output device(s) 1150 may include, for example, one or more displays, speakers, printers, or any other output device, or the like. In addition, the computing device 1100n may use an input device or output device included in another computing device as input device(s) 1140 or output device(s) 1150.

In addition, the computing device 1100 may include communication connection(s) 1160 allowing for communication thereof with other devices (e.g., the computing device 1300) through the network 1200. Here, the communication connection(s) 1160 may include a modem, network interface card (NIC), integrated network interface, radio frequency transmitter/receiver, infrared port, USB connection, or other interface for connecting the computing device 1100 to other computing devices. In addition, the communication connection(s) 1160 may include a wired connection or a wireless connection.

Each component of the computing device 1100 described above may be connected by various interconnections such as a bus (e.g., peripheral component interconnection (PCI), USB, firmware (IEEE 1394), optical bus structure, and the like), and may be interconnected by a network.

Terms such as "assessment unit", "frame grabber", "measurement unit", "lighting controller", and the like used in the present specification generally refer to computer-related entities that are hardware, a combination of hardware and software, software, or software in execution. For example, a component may be a process executed on a processor, a processor, an object, an executable, a thread of execution, a program, and/or a computer, but an embodiment thereof is not limited thereto. For example, both the application running on a controller and the controller may be components. One or more components can reside within a process and/or thread of execution, and a component can be localized on one computer or distributed between two or more computers.

As described above, according to the present disclosure, when a plurality of types of raw materials are mixed when supplying raw materials, the type of the raw material may be identified, thereby assessing a particle size with regard to each raw material type, and by checking a variation in the particle size with regard to each raw material type, it is possible to take action or respond to related operations.

While example embodiments have been illustrated and described above, it will be apparent to those skilled in the art that modifications and variations could be made without departing from the scope of the present disclosure as defined by the appended claims.

## Claims

1. An apparatus for assessing a particle size of raw materials of a blast furnace, comprising:
an image acquisition unit acquiring continuous images of raw materials transferred to a blast furnace; and
an assessment unit for assessing particle size of respective material by determining boundaries of respective material based on contrast of the image and determining type of respective material based on color and pattern of surface of respective material.

2. The apparatus for assessing a particle size of raw materials of a blast furnace of claim 1,
wherein the assessment unit comprises
a frame grabber that is synchronized with a conveying speed of a belt conveyor for transferring the raw material to the blast furnace and collects images acquired from the image acquisition unit in a unit of frames; and
a measurement unit identifying a type of raw materials according to a surface color and pattern of respective raw materials, and measuring a particle size of the raw materials by determining a boundary of respective raw materials based on a difference in brightness of raw material images included in the images collected by the frame grabber by using a preconfigured artificial intelligence algorithm.

3. The apparatus for assessing a particle size of raw materials of a blast furnace of claim 2,
wherein the measurement unit determines a representative size value of raw material individual particles by using size information according to the number of pixels occupied by the raw material individual particles in the raw material images.

4. The apparatus for assessing a particle size of raw materials of a blast furnace of claim 3,
wherein the measurement unit calculates an average particle size of all raw materials according to the determined representative size value of raw material individual particles, and calculates a particle size with regard to each raw material type according to the raw material type distinguished according to the artificial intelligence algorithm.

5. The apparatus for assessing a particle size of raw materials of a blast furnace of claim 1,
wherein the image acquisition unit comprises
a camera for capturing an image from above the raw material;
a lighting unit for providing light to a raw material before and after a moving direction of a belt conveyor for transferring the raw material;
a purge hood disposed below the camera to block an inflow of dust from the raw material; and
a frame disposed below the purge hood to block the inflow of dust from the raw material together with the purge hood.

6. A method for assessing a particle size of raw materials of a blast furnace, comprising operations in which:
an image acquisition unit acquires continuous images of raw materials transferred to a blast furnace;
an assessment unit identifies a type of raw materials according to a boundary of respective raw materials and a surface color and pattern of respective raw materials, based on a difference in brightness of raw material images included in the images, by using a preconfigured artificial intelligence algorithm;
the assessment unit determines a representative size value of raw material individual particles by using size information according to the number of pixels occupied by raw material individual particles in the raw material images; and
the assessment unit calculates an average particle size of all raw materials according to the determined representative size value of raw material individual particles, and calculates a particle size with respect to each raw material type according to the raw material type distinguished according to the artificial intelligence algorithm.
